# DEMANDE DE BREVET EUROPEEN

(11) **EP 1 285 716 A1**
(43) Date de publication de la demande: **26.02.2003**
(21) Numéro de dépôt: 01810819.1
(22) Date de dépôt: 22.08.2001
(51) Int. Cl.: B23F 5/20

(54) **Taillage par génération**

(71) Demandeur: TORNOS S.A., 2740 Moutier (CH)
(72) Inventeur: Paroz, Cedric, 2732 Saicourt (CH)
(74) Mandataire: BOVARD AG - Patentanwälte

(57) **Abrégé**

Procédé d'usinage sur une machine (1) comprenant, d'une part, au moins un dispositif (3) de support et d'entraînement en rotation d'une pièce (4) à usiner autour d'un axe (5) dit de rotation et, d'autre part, au moins un dispositif (6) de guidage et déplacement d'au moins l'un des éléments que sont un outil (8) et la pièce (4) selon une direction (9) sensiblement parallèle à l'axe (5) de rotation de la pièce (4),
chaque pièce (4) comportant quant à elle , sur au moins une fraction (40) de sa dimension longitudinale (41), une pluralités de rainures (11) qui, disposées radialement autour de sa surface périphérique (42), sont sensiblement équidistantes entre elles et ont une section transversale dont la forme et les dimensions sont déterminées de manière à constituer une pluralité de dents (13) sous ladite surface périphérique (42),
ce procédé étant caractérisé en ce qu'on usine chaque rainure (11) par fractions (43) successives de sa dimension longitudinale (40), et ce, pendant la rotation de la pièce (4).

## Description

L'invention se rapporte à un procédé d'usinage de dentures.

L'invention se rapporte également à une machine de tournage fonctionnant selon le procédé précité et aux pièces qui, pourvues d'au moins une denture, sont usinées sur cette machine, par lamise en oeuvre du procédé.

L'invention s'applique avantageusement à l'usinage de dentures sur une machine de tournage à commande numérique.

Par denture, on désigne une succession de saillies et de rainures qui sont disposées autour de la pièce et s'étendent chacune radialement et longitudinalement à la dite pièce.

La denture est, par exemple, destinée à constituer les saillies d'un accouplement en rotation de type dit à cannelures.

Une machine de tournage de pièces comprend classiquement un bâti et :
- au moins un dispositif de support et d'entraînement en rotation d'une pièce à usiner autour d'un axe de rotation,
- au moins un dispositif de guidage et déplacement d'au moins l'un des éléments que sont un outil et la pièce selon une direction sensiblement parallèle à l'axe de rotation de la pièce.

La fabrication de ce type de denture sur une machine de tournage, impliquerait que :
- le dispositif de guidage et déplacement de l'outil selon une direction sensiblement parallèle à l'axe longitudinal de la pièce soit équipé d'un dispositif d'entraînement en rotation d'une fraise dont le profil de coupe correspond à celui de la section transversale d'une rainure,
- le dispositif de support et d'entraînement en rotation de la pièce à usiner autour d'un axe de rotation soit équipé d'un dispositif de commande de sa rotation par fraction angulaire, de manière à pouvoir être utilisé comme un plateau diviseur.

Cette possibilité technique n'est pas compatible avec la fabrication de pièces à grande vitesse dans le cadre d'une production en série.

Un résultat essentiel que l'invention vise à obtenir est un procédé d'usinage qui permette la fabrication de dentures sans arrêt de la rotation de la broche qui porte la pièce destinée à être équipée d'au moins une telle denture.

D'autres résultats que l'invention vise à obtenir apparaîtront à la lecture de la description.

L'invention a pour objet un procédé du type précité, notamment caractérisé en ce que l'on usine chaque rainure par fractions successives de sa dimension longitudinale, et ce, pendant la rotation de la pièce.

L'invention a également pour objet la machine d'usinage qui fonctionne selon le procédé précité ainsi que les pièces qui, pourvues d'au moins une denture, sont usinées par la mise en oeuvre du procédé.

L'invention sera bien comprise à la lecture de la description ci-après faite à titre d'exemple non limitatif, en regard du dessin ci-annexé qui représente schématiquement :

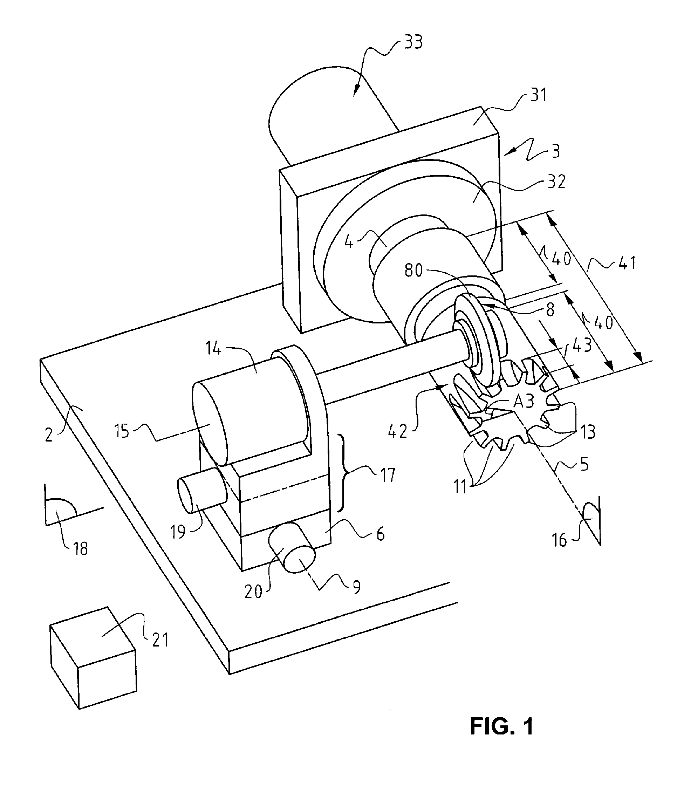

Figure 1 : vue en perspective, une machine de tournage de pièces qui est perfectionnée pour la fabrication de dentures sur des pièces usinées sur cette machine,

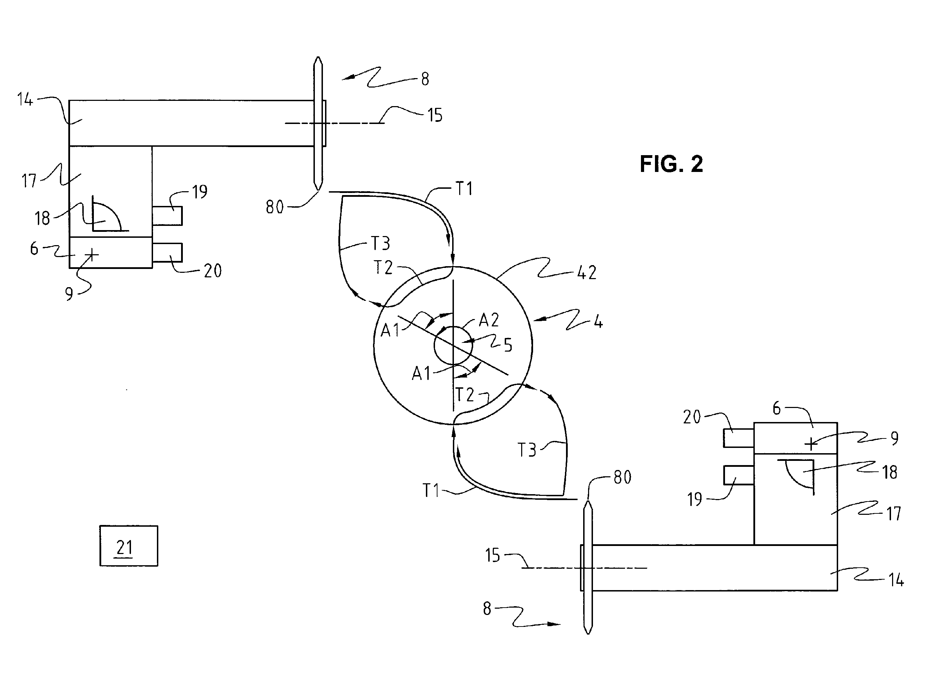

Figure 2 : observée depuis l'une des extrémités d'une pièce en cours d'usinage, la trajectoire d'un outil d'usinage utilisé pour fabriquer une denture du type de celle représentée en figure 1.

En se reportant au dessin, on voit une machine 1 d'usinage qui comprend classiquement un bâti 2 et :
- au moins un dispositif 3 de support et d'entraînement en rotation d'une pièce 4 à usiner autour d'un axe 5 dit de rotation,
- au moins un dispositif 6 de guidage et déplacement d'au moins l'un des éléments que sont un outil 8 et la pièce 4 selon une direction 9 sensiblement parallèle à l'axe 5 de rotation de la pièce 4.

Par exemple, le dispositif 3 de support et d'entraînement en rotation de la pièce 4 à usiner autour de l'axe 5 de rotation comprend lui même :
- un support 31 rigide relié au bâti 2 de la machine 1,
- une broche 32 porte-pièce montée rotative sur ce support 31 rigide,
- un moteur 33 d'entraînement en rotation de la broche 32.

Tel que cela apparaît au dessin, la machine permet la fabrication de pièces 4 comportant chacune, sur au moins une fraction 40 de leur dimension longitudinale 41, une pluralité de rainures 11 qui, disposées radialement autour de la surface périphérique 42 de chaque pièce 4, sont sensiblement équidistantes entre elles et ont une section transversale dont la forme et les dimensions, c'est à dire notamment la largeur et la profondeur, sont déterminées de manière à constituer une pluralité de dents 13 sous ladite surface périphérique 42.

Selon le procédé de l'invention, on usine chaque rainure 11 par fractions 43 successives de sa dimension longitudinale 40, et ce, pendant la rotation de la pièce 4.

Le procédé de l'invention est donc un procédé d'usinage qui peut être qualifié de procédé d'usinage "par génération".

L'usinage par génération est une opération d'usinage par enlèvement de matière qui permet de produire une surface dont la forme n'est pas complémentaire à celle de la partie active de l'outil de coupe utilisé pour l'enlèvement de matière, mais résulte d'au moins un mouvement relatif entre la pièce et l'outil.

De manière remarquable :
- on sélectionne un outil 8 de coupe de type rotatif, dit outil rotatif 8 et possédant au moins une partie active 80 dont la forme est compatible avec la forme de la section transversale de la rainure 11 à réaliser, et, en synchronisme avec la rotation de la pièce 4,
- par une première combinaison de mouvements, on déplace l'outil rotatif 8 sur une première trajectoire T1 pour amener sa partie active 80 à proximité de la surface périphérique 42 de la pièce 4 et sensiblement à l'aplomb d'une rainure 11 à réaliser,
- par une deuxième combinaison de mouvements, on déplace l'outil rotatif 8 sur une deuxième trajectoire T2, de manière à, d'une part, engager sa partie active 80 dans la pièce 4 d'une valeur correspondant au moins à une fraction de la profondeur de la rainure 11 à réaliser et, d'autre part, à accompagner la rotation de la pièce 4 sur une certaine fraction angulaire A1 de sa rotation de manière à réaliser un usinage par génération, puis à dégager la partie active 80 de l'outil rotatif 8 de la pièce 4,
- par une troisième combinaison de mouvements, on déplace au moins l'un des éléments que sont l'outil rotatif 8 et la pièce 4 sur une troisième trajectoire T3 de manière telle que la partie active 80 de l'outil 8 soit placée au-dessus de la surface périphérique 42 de la pièce 4 et sensiblement à l'aplomb d'une rainure 11 à réaliser, telle une nouvelle rainure 11,
- on réalise la deuxième et la troisième combinaisons de mouvements produisant les deuxième et troisième trajectoires T2, T3 jusqu'à ce que le nombre souhaité de rainures 11 ait été constitué.

L'outil rotatif 8 consiste par exemple en une fraise disque 8.

L'homme du métier est à même de choisir cette fraise sans avoir à faire preuve d'invention.

Dans une autre forme de réalisation, l'outil rotatif 8 consiste en un train de fraises disques 8.

De manière remarquable, on assure l'usinage d'une fraction 43 de la dimension longitudinale 40 de chaque rainure 11 après rotation de la pièce 4 d'une valeur A2 angulaire déterminée qui est comprise entre la valeur angulaire A3 qui sépare deux rainures 11 voisines et un nombre entier de cette valeur angulaire.

L'homme du métier est à même de déterminer la valeur A2 du déplacement angulaire sans avoir à faire preuve d'invention.

Par exemple, l'homme du métier peut choisir qu'un usinage ait lieu à chaque fraction angulaire déterminée de la rotation de la pièce, ou à chaque tour, ou après un nombre déterminé de tour.

La commande numérique autorise ce type de choix.

De manière tout aussi remarquable, en synchronisme avec la rotation de la pièce 4 et, au moins pendant l'opération consistant à déplacer l'outil rotatif 8 pour amener sa partie active 80 à proximité de la surface périphérique 42 de la pièce 4, sensiblement à l'aplomb d'une rainure 11 à réaliser, telle une nouvelle rainure 11,
on déplace longitudinalement au moins l'un des éléments que sont la pièce 4 et l'outil rotatif 8, et ce, d'au moins une fraction 43 de la dimension longitudinale 40 de chaque rainure 11 à réaliser.

De manière remarquable, pour autoriser les déplacements de l'outil 8:
- on associe l'outil rotatif 8 à un premier dispositif 14 pour l'entraînement en rotation de cet outil rotatif 8 autour d'un axe 15 sécant à un plan 16 contenant l'axe 5 de rotation de la pièce 4 à usiner,
- on associe ledit premier dispositif 14 à un second dispositif 17 pour le guidage du déplacement dudit premier dispositif 14 dans un plan 18 sécant à l'axe 5 de rotation de la pièce 4 à usiner,
- on associe au moins l'un des éléments que sont ledit second dispositif 17 et la pièce 4 à usiner à un troisième dispositif 6 pour le guidage du déplacement dudit second dispositif 17 dans une direction 9 sensiblement parallèle à l'axe 5 de rotation de la pièce 4 à usiner,
- on associe chacun desdits premier, second et troisième dispositifs 14, 17, 6 à un quatrième et un cinquième dispositifs 19, 20 moteur,
- on associe lesdits quatrième et cinquième dispositifs 19, 20 moteur à un sixième dispositif 21 de commande, et ce, en synchronisme avec la rotation de la pièce 4 à usiner.

De manière encore remarquable, on met en oeuvre deux outils 8 et on commande ces outils de manière à les déplacer en même temps dans des sens opposés et ce, avec une même vitesse et de mêmes accélérations, de manière telle que les à-coups engendrés par les déplacements saccadés d'un outil compensent les à-coups engendrés par les déplacements saccadés de l'autre outil.

De manière tout aussi remarquable, on utilise les outils pour réaliser simultanément dans des parties distinctes d'une même pièce 4, deux groupes de rainures 11.

Outre un gain de temps, cela permet de garantir un positionnement angulaire déterminé d'un groupe de rainure par rapport à l'autre.

Le procédé de l'invention est également remarquable en ce qu'on met en oeuvre un programme qui utilise les données numériques mémorisées d'une table des pas pour attribuer à au moins un dispositif de déplacement et de guidage d'au moins l'un des éléments que sont un outil et la pièce, une série d'ordres de déplacements se succédant en fonction d'une variante dépendant du temps, la séquence des ordres étant incluse dans la table des pas, et en ce qu'on établit ladite table des pas à partir des résultats d'un calcul définissant une trajectoire d'usinage optimale en fonction du temps en vue d'obtenir un profil donné avec un matériau donné en tenant compte des caractéristiques de la machine d'usinage.

Tel que cela a été annoncé, l'invention a également pour objet la machine d'usinage qui fonctionne selon le procédé précité ainsi que les pièces qui, pourvues d'au moins une denture, sont usinées par la mise en oeuvre du procédé.

La machine selon l'invention est également remarquable en ce qu'elle comprend en outre des moyens pour la mise en oeuvre du procédé, ces moyens consistant en des moyens d'exploitation d'un programme de commande qui utilise les données numériques mémorisées d'une table des pas pour attribuer à au moins un dispositif de déplacement et de guidage d'au moins l'un des éléments que sont un outil et la pièce, une série d'ordres de déplacements se succédant en fonction d'une variable dépendant du temps, la séquence des ordres étant incluse dans la table des pas, ladite table des pas étant établie à partir des résultats d'un calcul définissant une trajectoire d'usinage optimale en fonction du temps en vue d'obtenir un profil donné avec un matériau donné en tenant compte des caractéristiques de la machine d'usinage.

## Revendications

1. Procédé d'usinage sur une machine d'usinage (1) comprenant, d'une part, au moins un dispositif (3) de support et d'entraînement en rotation d'une pièce (4) à usiner autour d'un axe (5) de rotation et, d'autre part, au moins un dispositif (6) de guidage et déplacement d'au moins l'un des éléments que sont un outil (8) et la pièce (4) selon une direction (9) sensiblement parallèle à l'axe (5) de rotation de la pièce (4),
chaque pièce (4) comportant quant à elle , sur au moins une fraction (40) de sa dimension longitudinale (41), une pluralité de rainures (11) qui, disposées radialement autour de sa surface périphérique (42), sont sensiblement équidistantes entre elles et ont une section transversale dont la forme et les dimensions sont déterminées de manière à constituer une pluralité de dents (13) sous ladite surface périphérique (42),
ce procédé étant **caractérisé en ce qu'**on usine chaque rainure (11) par fractions (43) successives de sa dimension longitudinale (40), et ce, pendant la rotation de la pièce (4).

2. Procédé selon la revendication 1 **caractérisé en ce que**
- on sélectionne un outil (8) de coupe de type rotatif, dit outil rotatif (8) et possédant au moins une partie active (80) dont la forme est compatible avec la forme de la section transversale de la rainure (11) à réaliser, et, en synchronisme avec la rotation de la pièce (4),
- par une première combinaison de mouvements, on déplace l'outil rotatif (8) sur une première trajectoire (T1) pour amener sa partie active (80) à proximité de la surface périphérique (42) de la pièce (4) et sensiblement à l'aplomb d'une rainure (11) à réaliser,
- par une deuxième combinaison de mouvements, on déplace l'outil rotatif (8) sur une deuxième trajectoire (T2), de manière à, d'une part, engager sa partie active (80) dans la pièce (4) d'une valeur correspondant au moins à une fraction de la profondeur de la rainure (11) à réaliser et, d'autre part, à accompagner la rotation de la pièce (4) sur une certaine fraction angulaire (A1) de sa rotation de manière à réaliser un usinage par génération, puis à dégager la partie active (80) de l'outil rotatif (8) de la pièce (4),
- par une troisième combinaison de mouvements, on déplace au moins l'un des éléments que sont l'outil rotatif (8) et la pièce (4) sur une troisième trajectoire (T3) de manière telle que la partie active (80) de l'outil (8) soit placée au-dessus de la surface périphérique (42) de la pièce (4) et sensiblement à l'aplomb d'une rainure (11) à réaliser, telle une nouvelle rainure (11),
- on réalise la deuxième et la troisième combinaisons de mouvements produisant les deuxième et troisième trajectoires (T2, T3) jusqu'à ce que le nombre souhaité de rainures (11) ait été constitué.

3. Procédé selon l'une des revendications 1 ou 2 **caractérisé en ce que** l'on assure l'usinage d'une fraction (43) de la dimension longitudinale (40) de chaque rainure (11) après rotation de la pièce (4) d'une valeur (A2) angulaire déterminée qui est comprise entre la valeur angulaire (A3) qui sépare deux rainures (11) voisines et un nombre entier de cette valeur angulaire.

4. Procédé selon la revendication 3 **caractérisé en ce que** l'on déplace longitudinalement au moins l'un des éléments que sont la pièce (4) et l'outil rotatif (8), et ce, d'au moins une fraction (43) de la dimension longitudinale (40) de chaque rainure (11) à réaliser.

5. Procédé selon l'une quelconque des revendications 2 à 4 **caractérisé en ce que**
- on associe l'outil rotatif (8) à un premier dispositif (14) pour l'entraînement en rotation de cet outil rotatif (8) autour d'un axe (15) sécant à un plan (16) contenant l'axe (5) de rotation de la pièce (4) à usiner,
- on associe ledit premier dispositif (14) à un second dispositif (17) pour le guidage du déplacement dudit premier dispositif (14) dans un plan (18) sécant à l'axe (5) de rotation de la pièce (4) à usiner,
- on associe au moins l'un des éléments que sont ledit second dispositif (17) et la pièce (4) à usiner à un troisième dispositif (6) pour le guidage du déplacement dudit second dispositif (17) dans une direction (9) sensiblement parallèle à l'axe (5) de rotation de la pièce (4) à usiner,
- on associe chacun desdits premier, second et troisième dispositifs (14, 17, 6) à un quatrième et un cinquième dispositifs (19, 20) moteur,
- on associe lesdits quatrième et cinquième dispositifs (19, 20) moteur à un sixième dispositif (21) de commande, et ce, en synchronisme avec la rotation de la pièce (4) à usiner.

6. Procédé selon l'une quelconque des revendications 2 à 5 **caractérisé en ce que** l'on met en oeuvre deux outils (8) et on commande ces outils de manière à les déplacer en même temps dans des sens opposés et ce, avec une même vitesse et de mêmes accélérations, de manière telle que les à-coups engendrés par les déplacements saccadés d'un outil compensent les à-coups engendrés par les déplacements saccadés de l'autre outil.

7. Procédé selon la revendication 6, **caractérisé en ce que** l'on utilise les outils pour réaliser simultanément dans des parties distinctes d'une même pièce (4), deux groupes de rainures (11).

8. Procédé selon l'une quelconque des revendications 1 à 7, **caractérisé en ce qu'**on met en oeuvre un programme de commande qui utilise des données numériques mémorisées d'une table des pas pour attribuer à au moins un dispositif de déplacement et de guidage d'au moins l'un des éléments que sont un outil et la pièce, une série d'ordres de déplacements se succédant en fonction d'une variante dépendant du temps, la séquence des ordres étant incluse dans la table des pas, et **en ce qu'**on établit ladite table des pas à partir des résultats d'un calcul définissant une trajectoire d'usinage optimale en fonction du temps en vue d'obtenir un profil donné avec un matériau donné en tenant compte des caractéristiques de la machine d'usinage.

9. Machine d'usinage **caractérisée en ce qu'**elle fonctionne selon le procédé selon l'une quelconque des revendications 1 à 8.

10. Machine d'usinage selon la revendication 9 **caractérisée en ce qu'**elle comprend des moyens pour la mise en oeuvre du procédé selon la revendication 8, ces moyens consistant en des moyens d'exploitation d'un programme de commande qui utilise les données numériques mémorisées d'une table des pas pour attribuer à au moins un dispositif de déplacement et de guidage d'au moins l'un des éléments que sont un outil et la pièce, une série d'ordres de déplacements se succédant en fonction d'une variable dépendant du temps, la séquence des ordres étant incluse dans la table des pas, ladite table des pas étant établie à partir des résultats d'un calcul définissant une trajectoire d'usinage optimale en fonction du temps en vue d'obtenir un profil donné avec un matériau donné en tenant compte des caractéristiques de la machine d'usinage.

11. Pièces pourvues d'au moins une denture **caractérisées en ce qu'**elles sont usinées par la mise en oeuvre du procédé selon l'une quelconque des revendications 1 à 8.
